# EUROPEAN PATENT APPLICATION

(11) **EP 4 769 553 A1**
(43) Date of publication of application: **01.07.2026**
(21) Application number: 25837762.1
(22) Date of filing: 09.07.2025
(51) Int. Cl.: H01M 4/36, H01M 4/525, H01M 4/505, C01G 53/50, H01M 4/131, H01M 10/052, H01M 4/02

(54) **POSITIVE ELECTRODE ACTIVE MATERIAL, POSITIVE ELECTRODE ACTIVE MATERIAL MANUFACTURING METHOD, POSITIVE ELECTRODE, AND LITHIUM SECONDARY BATTERY**

(30) Priority: 12.07.2024 KR 20240092696
(71) Applicant: LG Energy Solution, Ltd., Seoul 07335 (KR)
(72) Inventor: KANG, Bo Hyun, Daejeon 34122 (KR); YOO, Sol Ji, Daejeon 34122 (KR); SHIN, Dong Hwa, Daejeon 34122 (KR); KIM, Su Hwan, Daejeon 34122 (KR); CHOI, Young Cheol, Daejeon 34122 (KR); JEON, Hye Lim, Daejeon 34122 (KR)
(74) Representative: Hoffmann Eitle
(86) International application number: PCT/KR2025/010006
(87) International publication number: WO 2026/014933

(57) **Abstract**

The present invention relates to a positive electrode active material comprising a lithium nickel-based oxide, and a coating layer formed on the lithium nickel-based oxide and comprising a compound represented by [Formula 2] below, and a method for preparing the same.

[Formula 2] LiₓMn_{y}M⁴_{z}O_{w}

In [Formula 2], M⁴ is Al or Mo, x is an integer from 2 to 8, y is an integer from 2 to 8, z is an integer from 1 to 12, and w is an integer from 8 to 48.

## Description

### TECHNICAL FIELD

### Cross-reference to Related Applications

This application claims the benefit of priority from Korean Patent Application No. 10-2024-0092696, filed on July 12, 2024, the contents of which are incorporated herein by reference.

### Technical Field

The present invention relates to a positive electrode active material, a method for preparing the positive electrode active material, and a positive electrode and a lithium secondary battery comprising the positive electrode active material, and more particularly, to a positive electrode active material having excellent low-temperature output properties, a method for preparing the same, and a positive electrode and a lithium secondary battery comprising the positive electrode active material.

### BACKGROUND ART

Lithium secondary batteries are generally manufactured by interposing a separator between a positive electrode containing a positive electrode active material composed of a lithium-containing transition metal oxide and a negative electrode containing a negative electrode active material capable of storing lithium ions to form an electrode assembly, inserting the electrode assembly into a battery case, injecting a non-aqueous electrolyte, which serves as a lithium ion transport medium, and then sealing.

The lithium secondary batteries are used not only in portable electronic devices such as mobile phones and laptops, but also in electric vehicles, and demand for the lithium secondary batteries has been rapidly increasing with the recent expansion of electric vehicles. Lithium secondary batteries used in electric vehicles require high energy density, high output characteristics, and durability for long-term use in severe environments such as low and high temperatures.

However, lithium secondary batteries developed for electric vehicles up to now have limitations due to reduced lithium ion mobility in low-temperature environments, which increases resistance, thereby leading to a rapid reduction in capacity and output, limiting performance in winter and cold regions. Therefore, the development of lithium secondary batteries with excellent low-temperature output characteristics is required.

### DISCLOSURE OF THE INVENTION

### TECHNICAL PROBLEM

The present invention aims to solve the aforementioned defects by forming a coating layer with a low lithium migration barrier energy on the surface of a lithium nickel-based oxide, thereby providing a positive electrode active material with excellent lithium ion mobility and little resistance increase even at low temperatures, and a method for preparing the same.

In addition, the present invention provides a positive electrode comprising the positive electrode active material described above, exhibiting excellent low-temperature output characteristics, and a lithium secondary battery comprising the same.

### TECHNICAL SOLUTION

[1] The present invention provides a positive electrode active material comprising: a lithium nickel-based oxide; and a coating layer formed on the lithium nickel-based oxide and comprising a compound represented by [Formula 2] below.

   [Formula 2] LiₓMn_{y}M⁴_{z}O_{w}

   In [Formula 2], M⁴ is Al or Mo, x is an integer from 2 to 8, y is an integer from 2 to 8, z is an integer from 1 to 12, and w is an integer from 8 to 48.
[2] The present invention provides the positive electrode active material according to [1], wherein the compound represented by [Formula 2] is Li₂Mn₃AlO₈ or Li₈Mn₈Mo₁₂O₄₈.
[3] The present invention provides the positive electrode active material according to [1] or [2], wherein the compound represented by [Formula 2] is comprised in 100 ppm to 20,000 ppm based on the total weight of the positive electrode active material.
[4] The present invention provides the positive electrode active material according to at least one among [1] to [3], wherein the lithium nickel-based oxide is represented by [Formula 1] below.

   [Formula 1] LiₐNi_{b}Co_{c}M¹_{d}M²ₑO₂

   In [Formula 1], M¹ is Mn, Al, or a combination thereof, M² comprises one or more elements selected from the group consisting of Ti, Mg, Al, Zr, Y, Ba, Ca, Sr, W, Ta, Nb, and Mo, 0.9≤a≤1.1, 0.5≤b<1, 0<c<0.5, 0<d<0.5, and 0≤e≤0.2.
[5] The present invention provides the positive electrode active material according to at least one among [1] to [4], wherein the lithium nickel-based oxide is a single particle-type lithium nickel-based oxide containing 50 or less nodules.
[6] The present invention provides the positive electrode active material according to at least one among [1] to [5], wherein the lithium nickel-based oxide has a Ni content of 50 mol% to 80 mol% among total metals excluding lithium.
[7] The present invention provides the positive electrode active material according to at least one among [1] to [6], wherein the lithium nickel-based oxide is represented by [Formula 1-1] below.

   [Formula 1-1] Liₐ₁[Ni_{b1}Co_{c1}Mn_{d1}M³ₑ₁]O₂

   In [Formula 1-1], M³ comprises one or more elements selected from the group consisting of Ti, Mg, Al, Zr, Y, Ba, Ca, Sr, W, Ta, Nb, and Mo, 0.9≤a1≤1.1, 0.5≤b1≤0.8, 0<c1<0.5, 0<d1<0.5, and 0≤e1≤0.2.
[8] The present invention provides a method for preparing a positive electrode active material, the method comprising: a step of preparing a coating raw material by mixing a Li-containing material, a Mn-containing material, and a M⁴-containing material (where M⁴ is Al or Mo); and a step of mixing the coating raw material with a lithium nickel-based oxide and heat-treating the mixture to form a coating layer comprising a compound represented by [Formula 2] above on the lithium nickel-based oxide.
[9] The present invention provides the method for preparing a positive electrode active material according to [8], wherein the Li-containing material comprises CH₃COOLi, LiNO₃, LiH₃C₂O₂, LiOH, Li₂CO₃ or a combination thereof.
[10] The present invention provides the method for preparing a positive electrode active material according to [8] or [9], wherein the Mn-containing material comprises (CH₃COO)₂Mn, MnCO₃, MnO, MnO₂, Mn₂O₃, Mn₃O₄, MnH₆C₄O₄ or a combination thereof.
[11] The present invention provides the method for preparing a positive electrode active material according to at least one among [8] to [10], wherein the M⁴-containing material comprises Al₂O₃, AlN, Al(NO₃)₃, MoO₃, (NH₄)₆Mo₇O₂₄ or a combination thereof.
[12] The present invention provides the method for preparing a positive electrode active material according to at least one among [8] to [11], wherein the coating raw material and the lithium nickel-based oxide are dry or wet mixed.
[13] The present invention provides the method for preparing a positive electrode active material according to at least one among [8] to [12], wherein the heat-treating is performed at 100°C to 1000°C for 1 hour to 12 hours.
[14] The present invention provides the method for preparing a positive electrode active material according to at least one among [8] to [13], wherein the step of preparing the coating raw material comprises: a step of forming a mixture by mixing the Li-containing material, the Mn-containing material, and the M⁴-containing material (where M⁴ is Al or Mo); and a step of pre-heat treating the mixture to form a coating raw material.
[15] The present invention provides the method for preparing a positive electrode active material according to [14], wherein the pre-heat treating is performed at 100°C to 1000°C for 3 hours to 20 hours.
[16] The present invention provides a positive electrode comprising the positive electrode active material according to any one among [1] to [7].
[17] The present invention provides a lithium secondary battery comprising: the positive electrode according to [16]; a negative electrode oppositely disposed to the positive electrode; and an electrolyte.

### ADVANTAGEOUS EFFECTS

The positive electrode active material according to the present invention includes a coating layer containing a compound represented by [Formula 2] on the surface of a lithium nickel-based oxide. Since the compound represented by [Formula 2] has a low migration barrier energy for lithium ions, when a coating layer containing the compound is formed on the surface of the positive electrode active material, the surface resistance of positive electrode active material particles decreases and lithium ion diffusivity increases. Therefore, when the positive electrode active material according to the present invention is applied, the output characteristics, particularly, low-temperature output characteristics of a lithium secondary battery, may be improved.

### BRIED DESCRIPTION OF DRAWING

FIG. 1 is a graph showing the results of X-ray diffraction analysis of the coating raw material prepared in Example 1.
FIG. 2 is a graph showing the results of X-ray diffraction analysis of the coating raw material prepared in Example 2.

### BEST MODE FOR CARRYING OUT THE INVENTION

Hereinafter, the present invention will be explained in particular.

Words or terms used in this specification and claims shall not be interpreted as the meaning defined in commonly used dictionaries. The words or terms should be interpreted as having a meaning that is consistent with the technical idea of the invention, based on the principle that an inventor may properly define the meaning of the words or terms to best explain the invention.

In the present invention, "single particle-type" refers to a particle formed by an aggregation of 50 or less sub-particles. The sub-particle unit constituting a single particle-type particle is referred to as a nodule. Single particle-type particles include single particles composed of one nodule and pseudo-single particles which are composites of 2 to 50 nodules.

The "nodule" refers to a sub-particle unit constituting a single particle or pseudo-single particle and may be a single crystal without a crystalline grain boundary, or a polycrystal that visually exhibits no grain boundaries when observed using a scanning electron microscope at a magnification of 5,000x to 20,000x.

In the present invention, "secondary particle" refers to a particle formed by an aggregation of more than 50 sub-particles. To distinguish from the sub-particles that constitute single particles, the sub-particles that constitute secondary particles are referred to as "primary particles."

In the present invention, the term "particle" encompasses any one or all of a single particle, a pseudo-single particle, a primary particle, a nodule, and a secondary particle.

In the present invention, the mean particle diameter (Dₘₑₐₙ) of a nodule or primary particle refers to the arithmetic mean value calculated after measuring the particle diameters of nodules or primary particles observed in a scanning electron microscope image.

In the present invention, the "mean particle diameter D₅₀" refers to the particle size corresponding to 50% of the volume-cumulative particle size distribution of the target powder and may be measured using a laser diffraction method. For example, the target powder may be dispersed in a dispersion medium, introduced into a commercially available laser diffraction particle size measuring device (for example, Microtrac MT 3000), and irradiated with ultrasonic waves of approximately 28 kHz at a power output of 60 W. A volume-accumulated particle size distribution graph is then obtained, and the particle size corresponding to 50% of the volume-accumulated particle size may be determined.

The present inventors have conducted repeated research to improve the low-temperature output characteristics of lithium secondary batteries and as a result, discovered that if applying a positive electrode active material including a lithium manganese-based oxide containing Al or Mo, which has a low lithium migration barrier energy, coated on the surface of a lithium nickel-based oxide, the low-temperature output characteristics of lithium secondary batteries may be improved, and completed the present invention.

### Positive Electrode Active Material

First, the positive electrode active material according to the present invention will be described.

The positive electrode active material according to the present invention comprises: a lithium nickel-based oxide; and a coating layer formed on the lithium nickel-based oxide and comprising a compound represented by [Formula 2] below.

[Formula 2] LiₓMn_{y}M⁴_{z}O_{w}

In [Formula 2], M⁴ is Al or Mo, x is an integer from 2 to 8, y is an integer from 2 to 8, z is an integer from 1 to 12, and w is an integer from 8 to 48.

### (1) Lithium Nickel-based Oxide

In the positive electrode active material according to the present invention, the lithium nickel-based oxide may be a lithium composite transition metal oxide including nickel at 50 mol% or more, 50 mol% to 80 mol%, 50 mol% to 70 mol%, or 55 mol% to 65 mol% of the total metals excluding lithium.

For example, the lithium nickel-based oxide may be represented by [Formula 1] below.

[Formula 1] LiₐNi_{b}Co_{c}M¹_{d}M²ₑO₂

In [Formula 1], M¹ is Mn, Al, or a combination thereof, preferably, Mn or a combination of Mn and Al.

In [Formula 1], M² is a doping element doped into a transition metal site included in the lithium nickel-based oxide. When the M² element is included, effects such as suppressing cation mixing of the positive electrode active material and suppressing structural changes during repeated charge and discharge may be achieved. M² may include one or more elements selected from the group consisting of Ti, Mg, Al, Zr, Y, Ba, Ca, Sr, W, Ta, Nb, and Mo, and preferably, one or more elements selected from the group consisting of Zr, W, Y, Ba, Ti, Mg, Ta, and Nb.

In [Formula 1], a represents the molar ratio of lithium in the lithium nickel-based oxide, and may satisfy 0.9≤a≤1.1, 0.95≤a≤1.1, or 1≤a≤1.08. When a satisfies the above range, excellent capacity characteristics may be exhibited, and a stable layered structure may be formed.

In [Formula 1], b represents the molar ratio of nickel among the total metals excluding lithium in the lithium nickel-based oxide, and may satisfy 0.5≤b<1.0, 0.5≤b≤0.95, 0.5≤b≤ 0.90, 0.5≤b≤0.80, or 0.5≤b≤0.70. When the above range is satisfied, excellent capacity characteristics and structural stability may be achieved.

In [Formula 1], c represents the molar ratio of cobalt among the total metals excluding lithium in the lithium nickel-based oxide, and may satisfy 0<c<0.5, 0.01≤c<0.5, 0.02≤c<0.5, 0.03≤c<0.4, 0.05≤c≤0.3, 0.08≤c≤0.2, or 0.08≤c≤0.12. When the above range is satisfied, the content of M¹ may be relatively increased, while having excellent output characteristics, and structural stability may be improved.

In [Formula 1], d represents the molar ratio of M¹ among the total metals excluding lithium in the lithium nickel-based oxide, and may satisfy 0<d<0.5, 0.01≤d<0.5, 0.05≤d<0.5, 0.1≤d<0.5, 0.2≤d≤0.4, or 0.25≤d≤0.35. When the above range is satisfied, excellent structural stability may be achieved.

In [Formula 1], e represents the molar ratio of M² among the total metals excluding lithium in the lithium nickel-based oxide, and may satisfy 0≤e≤0.2, 0≤e≤0.15, 0≤e≤0.10, 0 ≤e≤0.05, or 0≤e≤0.01. When the above range is satisfied, the structural stability of the lithium nickel-based oxide may be improved.

In [Formula 1], d/c may be 1.1 to 5.0, 1.5 to 4.5, 2.0 to 4.0, 2.5 to 3.5, or 2.7 to 3.3. When the above range is satisfied, the structural stability and thermal stability of the positive electrode active material may be improved, while having a cost advantage by containing relatively less cobalt. In addition, when combined with the coating layer according to the present invention, the effect of improving low-temperature output characteristics may be maximized.

The form of the lithium nickel-based oxide is not particularly limited and may be in the form of secondary particles including more than 50 primary particles aggregated together, or in the form of single particles including 50 or less nodules. If necessary, a positive electrode active material including secondary particle-type lithium nickel-based oxide and a positive electrode active material including single particle-type lithium nickel-based oxide may be mixed and used. A positive electrode active material including secondary particle-type lithium nickel-based oxide exhibits excellent resistance and capacity characteristics, while a positive electrode active material including single particle-type lithium nickel-based oxide exhibits excellent high-temperature/high-voltage stability and lifespan characteristics. Therefore, an appropriate type of lithium nickel-based oxide may be selected and used, taking into account the performance and specifications of the lithium secondary battery to be manufactured.

According to an embodiment, the lithium nickel-based oxide may be a single particle-type lithium nickel-based oxide including 50 or less nodules.

Compared to secondary particle-type lithium nickel-based oxide, single particle-type lithium nickel-based oxide exhibits less particle breakage due to rolling during positive electrode manufacturing and superior structural stability under high-temperature and/or high-voltage conditions, and when the single particle-type lithium nickel-based oxide is applied, positive electrode degradation under high-temperature/high-voltage conditions may be small, less fine particles may be generated after negative electrode manufacturing, and thus gas generation due to side reactions between fine particles and an electrolyte may be small. Therefore, single particle-type lithium nickel-based oxide is advantageous for manufacturing a lithium secondary battery with long-life characteristics.

Meanwhile, the single particle-type lithium nickel-based oxide preferably includes 50 or less nodules, preferably 30 or less, more preferably, 1 to 25, and even more preferably, 1 to 15 nodules. If the single particle-type lithium nickel-based oxide includes excessive nodules, particle breakage increases during electrode manufacturing, and internal cracking due to volume expansion/contraction of the nodules during charge and discharge increases, resulting in poor high-temperature lifespan and storage characteristics.

Meanwhile, the nodules may have a mean particle diameter of 0.8 µm to 4.0 µm, preferably, 0.8 µm to 3 µm, and more preferably, 1.0 µm to 3.0 µm. When the mean particle diameter of the nodules satisfies the above range, particle breakage may be minimized during electrode manufacturing, and resistance increases may be more effectively suppressed. In this case, the mean particle diameter of the nodules may be determined by measuring the particle sizes of the nodules observed in an SEM image obtained by analyzing the positive electrode active material powder using a scanning electron microscope (SEM), and then calculating the arithmetic mean of the measured values.

Meanwhile, the lithium nickel-based oxide may have a D₅₀ of 2.0 µm to 10.0 µm, preferably, 2.0 µm to 8.0 µm. About 3.0 µm to 7.0 µm is more preferable. If the D₅₀ of the lithium nickel-based oxide is too small, the processability during electrode manufacturing may be poor, and the electrolyte impregnation property may be poor, which may increase the electrochemical properties. If the D₅₀ is too large, there is a problem that the resistance increases and the output characteristics are deteriorated.

Meanwhile, the single particle-type lithium nickel-based oxide may have a Ni content of 50 mol% to 80 mol%, preferably, 50 mol% to 75 mol%, and more preferably, 50 mol% to 70 mol%, of the total metals excluding lithium. In the case of a single particle-type lithium nickel-based oxide having a nickel content of 50 mol% to 80 mol%, the structural stability at high voltage is higher than that of a lithium nickel-based oxide having a nickel content exceeding 80 mol% or having a secondary particle form, so that the degradation of lifespan characteristics during high-voltage operation may be minimized. Specifically, as the nickel content in the lithium nickel-based oxide increases, the amount of highly reactive Ni⁴⁺ ions increases, which lowers the structural stability of the positive electrode active material during charge and discharge, causing positive electrode degradation to occur rapidly. This phenomenon is further severe during high-voltage operation. Therefore, in the present invention, by applying a lithium nickel-based oxide having a low Ni content of 80 mol% or less, the degradation of lifespan due to active material degradation during high-voltage operation may be suppressed. However, since excessively low Ni content degrades capacity characteristics, the Ni content of the lithium nickel-based oxide is preferably between 50 mol% and 80 mol%.

Specifically, the single particle-type lithium nickel-based oxide may be a lithium transition metal oxide containing nickel, manganese, and cobalt, for example, represented by [Formula 1-1] below.

[Formula 1-1] Liₐ₁[Ni_{b1}Co_{c1}Mn_{d1}M³ₑ₁]O₂

In [Formula 1-1], M² may include one or more elements selected from the group consisting of Ti, Mg, Al, Zr, Y, Ba, Ca, Sr, W, Ta, Nb, and Mo. The inclusion of M³ enhances the structural stability of the lithium nickel-based oxide particles, resulting in superior lifespan characteristics during high-voltage operation. Preferably, the M³ element may include one or more selected from the group consisting of Ti, Mg, Al, Zr, and Y, more preferably, two or more selected from the group consisting of Ti, Mg, Al, Zr, and Y.
a1 represents the lithium molar ratio in the lithium nickel-based oxide and may be 0.9≤a1≤1.1, 0.95≤a1≤1.1, or 1.0 ≤a1≤1.08. When a1 satisfies the above range, a stable layered crystal structure may be formed.
b1 represents the nickel molar ratio among the total metals excluding lithium in the lithium nickel-based oxide and may be 0.5≤b1≤0.8, 0.5≤b1≤0.7, or 0.55≤b1≤0.7. When b1 satisfies the above range, excellent high-temperature and/or high-voltage stability may be exhibited.
c1 represents the molar ratio of cobalt among the total metals excluding lithium in the lithium nickel-based oxide, and may be 0<c1<0.5, 0.01≤c1≤0.4, 0.05≤c1≤0.3, or 0.08≤c1≤ 0.15.
d1 represents the molar ratio of manganese in the total metals excluding lithium in the lithium nickel-based oxide, and may be 0<d1<0.5, 0.05≤d1≤0.4, 0.1≤d1≤0.4, 0.2≤d1≤0.4, or 0.25≤d1≤0.35.
e1 represents the molar ratio of M³ element in the total metals excluding lithium in the lithium nickel-based oxide, and may be 0≤e1≤0.2, 0≤e1≤0.1, 0≤e1≤0.05, or 0≤e1≤ 0.01. When the molar ratio of the M³ element satisfies the above range, the structural stability and capacity of the positive electrode active material may both be excellent.

### (2) Coating Layer

The coating layer is formed on the lithium nickel-based oxide and suppresses direct contact between an electrolyte and the lithium nickel-based oxide, thereby reducing gas generation during charge and discharge and preventing transition metal elution.

The coating layer according to the present invention includes a compound represented by [Formula 2] below.

[Formula 2] LiₓMn_{y}M⁴_{z}O_{w}

In [Formula 2], M⁴ is Al or Mo.

In [Formula 2], x is an integer from 2 to 8. Specifically, x may be an integer from 2 to 6, an integer from 2 to 4, an integer from 2 to 3, or 2.

In [Formula 2], y is an integer from 2 to 8. Specifically, y may be an integer from 3 to 8, from 2 to 6, an integer from 2 to 6, an integer from 2 to 4, an integer from 2 to 3, or 2.

In [Formula 2], z is an integer from 1 to 12. Specifically, z may be an integer from 1 to 10, an integer from 1 to 8, an integer from 1 to 6, an integer from 1 to 4, or an integer from 1 to 3.

In [Formula 2], w is an integer from 8 to 48. Specifically, w may be an integer from 8 to 45, an integer from 8 to 42, an integer from 8 to 36, an integer from 8 to 32, an integer from 8 to 28, an integer from 8 to 24, an integer from 8 to 20, an integer from 8 to 16, or an integer from 8 to 12.

The compound represented by [Formula 2] has a low lithium migration barrier energy of 0.4 eV or less and excellent lithium diffusivity. In this case, the lithium migration barrier energy refers to the energy required for lithium to diffuse outward from a chemical material containing lithium. Accordingly, when a coating layer containing the compound of [Formula 2] is formed on the surface of the positive electrode active material, side reactions with an electrolyte may be effectively suppressed, while minimizing the reduction in lithium ion mobility. In addition, when a coating layer containing the compound of [Formula 2] is formed on the surface of the positive electrode active material, the surface resistance of the positive electrode active material at low temperatures is lowered compared to a positive electrode active material without a coating layer, allowing lithium ions to more easily migrate out of the positive electrode active material, thereby achieving excellent low-temperature output characteristics.

Specifically, the compound represented by [Formula 2] may be Li₂Mn₃AlO₈ or Li₈Mn₈Mo₁₂O₄₈. In this case, the low-temperature output characteristics may be even better.

In the present invention, the compound represented by [Formula 2] may be included in an amount of 100 ppm to 20,000 ppm, 1,000 ppm to 18,000 ppm, 5,000 ppm to 15,000 ppm, 8,000 ppm to 12,000 ppm, 9,000 ppm to 11,000 ppm, or 9,500 ppm to 10,500 ppm based on the total weight of the positive electrode active material. When the content of the compound represented by [Formula 2] satisfies the above range, the balance between the capacity characteristics and the effect of improving low-temperature performance of the positive electrode active material may be adjusted.

### Method for Preparing Positive electrode Active Material

Next, a method for preparing a positive electrode active material according to the present invention will be described.

The method for preparing a positive electrode active material according to the present invention comprises: (1) a step of preparing a coating raw material by mixing a Li-containing material, a Mn-containing material, and an M⁴-containing material (where M⁴ is Al or Mo); and (2) a step of mixing the coating raw material with a lithium nickel-based oxide and heat-treating the mixture to form a coating layer comprising a compound represented by [Formula 2] below on the lithium nickel-based oxide.

[Formula 2] LiₓMn_{y}M⁴_{z}O_{w}

In [Formula 2], M⁴ is Al or Mo, x is an integer from 2 to 8, y is an integer from 2 to 8, z is an integer from 1 to 12, and w is an integer from 8 to 48.

Specifically, the compound represented by [Formula 2] may be Li₂Mn₃AlO₃ or Li₈Mn₈Mo₁₂O₄₈.

First, a coating raw material is prepared by mixing a Li-containing material, a Mn-containing material, and a M⁴-containing material. The coating raw material is for synthesizing the compound represented by [Formula 2] and may be a material formed by mixing the Li-containing material, the Mn-containing material, and the M⁴-containing material to form a mixture and pre-heat treating the mixture. If pre-heat treatment is performed, the coating raw material may include the compound represented by [Formula 2].

The Li-containing material may include a Li-containing oxide, nitride, halide, hydroxide, carbonate, nitrate, acetate, or a combination thereof, for example, CH₃COOLi, LiNO₃, LiH₃C₂O₂, LiOH, Li₂CO₃, or a combination thereof, specifically, CH₃COOLi, LiOH, or a combination thereof, but is not limited thereto.

The Mn-containing material may include a Mn-containing oxide, nitride, halide, hydroxide, carbonate, nitrate, acetate, or a combination thereof, for example, (CH₃COO)₂Mn, MnCO₃, MnO, MnO₂, Mn₂O₃, Mn₃O₄, MnH₆C₄O₄, or a combination thereof, and specifically, (CH₃COO)₂Mn, but is not limited thereto.

The M⁴-containing material may include a M⁴ element (Al or Mo)-containing oxide, nitride, halide, hydroxide, carbonate, nitrate, ammonium salt, or a combination thereof, for example, Al₂O₃, AlN, Al(NO₃)₃, MoO₃, (NH₄)₆Mo₇O₂₄, or a combination thereof, and specifically, may include Al(NO₃)₃, (NH₄)₆Mo₇O₂₄, or a combination thereof, but is not limited thereto.

Meanwhile, when mixing the Li-containing material, Mn-containing material, and M⁴-containing material, the mixing ratio may be such that the molar ratio of Li:Mn:M⁴ in the mixture is 1.9 to 8.1: 1.9 to 8.1: 0.9 to 12.1, 1.9 to 5.0: 1.9 to 6.0: 0.9 to 10.0, 1.9 to 3.0: 1.9 to 4.0: 0.9 to 5.0, or 1.9 to 2.1: 1.9 to 3.1: 0.9 to 3.1. When the content of each component in the mixture satisfies the above range, the synthesis of the compound represented by [Formula 2] is advantageous.

Meanwhile, when performing the pre-heat treatment, the pre-heat treatment may be performed at a temperature of 100°C to 1000°C, 200°C to 900°C, 250°C to 800°C, 300°C to 700°C, or 400°C to 600°C. The pre-heat treatment may be performed for 3 to 20 hours, 5 to 18 hours, 8 to 15 hours, or 10 to 14 hours. When the pre-heat treatment is performed under the conditions, the synthesis of the compound represented by [Formula 2] is advantageous.

Specifically, when M⁴ is Al, the pre-heat treatment may be performed at a temperature of 100°C to 1000°C, 200°C to 950°C, 300°C to 850°C, 400°C to 800°C, 500°C to 700°C, or 550°C to 650°C. When M⁴ is Al, the pre-heat treatment may be performed for 3 to 20 hours, 5 to 18 hours, 8 to 15 hours, or 10 to 14 hours. When the pre-heat treatment is performed under the conditions, the synthesis of the compound represented by [Formula 2], in which M⁴ is Al, is advantageous.

Specifically, when M⁴ is Mo, the pre-heat treatment may be performed at a temperature of 100°C to 1000°C, 150°C to 900°C, 200°C to 800°C, 250°C to 700°C, 280°C to 600°C, 300°C to 500°C, or 350°C to 450°C. When M⁴ is Mo, the pre-heat treatment may be performed for 3 to 20 hours, 5 to 18 hours, 8 to 15 hours, or 10 to 14 hours. When the pre-heat treatment is performed under the conditions, the synthesis of the compound represented by [Formula 2], in which M⁴ is Mo, is advantageous.

When the coating raw material is prepared through the above process, the prepared coating raw material is mixed with the lithium nickel-based oxide, and heat treatment is performed to form a coating layer.

The mixing method of the coating raw material and the lithium nickel-based oxide is not particularly limited and may be performed by dry mixing or wet mixing. For example, the coating raw material with a solid phase and the lithium nickel-based oxide with a solid phase may be dry mixed by stirring in a mixer or the like, or the coating raw material and the lithium nickel-based oxide may be wet mixed by stirring in a solvent such as water or ethanol.

Meanwhile, the heat treatment may be performed at a temperature of 100°C to 1,000°C, 150°C to 900°C, 200°C to 800°C, 250°C to 700°C, 280°C to 600°C, 300°C to 500°C, or 350°C to 450°C. The heat treatment may be performed for 1 to 12 hours, 1 to 10 hours, 1 to 8 hours, 2 to 6 hours, or 2 to 4 hours. When heat treatment is performed under the conditions, a coating layer is smoothly formed on the lithium nickel oxide, and the synthesis of the compound represented by [Formula 2] is advantageous.

The prepared positive electrode active material is identical to that described above, so a detailed description will be omitted.

### Positive Electrode

Next, the positive electrode according to the present invention includes the positive electrode active material described above. Specifically, the positive electrode may include a positive electrode active material layer including the positive electrode active material described above, and more specifically, may include: a positive electrode current collector; and a positive electrode active material layer positioned on the positive electrode current collector and including the positive electrode active material described above.

Hereinafter, each component of the positive electrode according to the present invention will be described in detail.

### (1) Positive Electrode Current Collector

The positive electrode current collector may use various positive electrode current collectors used in the art. For example, the positive electrode current collector may use stainless steel, aluminum, nickel, titanium, calcined carbon, or aluminum or stainless steel, surface-treated with carbon, nickel, titanium, silver, or the like. The positive electrode current collector typically has a thickness of 3 to 500 µm, and fine irregularities may be formed on the surface of the positive electrode current collector to enhance the adhesion of the positive electrode active material. The positive electrode current collector may be used in various forms such as a film, sheet, foil, net, porous body, foam, and non-woven fabric.

### (2) Positive Electrode Active Material Layer

The positive electrode active material layer may be positioned on the positive electrode current collector, specifically, on one or both sides of the positive electrode current collector. The positive electrode active material layer may have a single layer or a multilayer structure of two or more layers.

The positive electrode active material layer may include a positive electrode active material, a positive electrode conductive material, and a positive electrode binder.

In this case, the positive electrode active material is a positive electrode active material according to the present invention described above, that is, the lithium nickel-based oxide, and a coating layer formed on the lithium nickel-based oxide and containing a compound represented by [Formula 2] below. The specific characteristics of the positive electrode active material are the same as described above.

[Formula 2] LiₓMn_{y}M⁴_{z}O_{w}

In [Formula 2], M⁴ is Al or Mo, x is an integer from 2 to 8, y is an integer from 2 to 8, z is an integer from 1 to 12, and w is an integer from 8 to 48.

The positive electrode active material may be included in an amount of 90 wt% to 99 wt%, preferably, 92 wt% to 98 wt%, and more preferably, 94 wt% to 98 wt%, based on the total weight of the positive electrode active material layer. When the above range is satisfied, the energy density and capacity characteristics of a lithium secondary battery to which the positive electrode is applied may be improved.

The positive electrode conductive material is used to impart conductivity to the electrode, and any material that does not cause chemical changes in the battery and has electronic conductivity may be used without particular limitations. Specific examples include: graphite such as natural graphite or artificial graphite; carbon-based materials such as carbon black, acetylene black, Ketjen black, channel black, furnace black, lamp black, thermal black, carbon fiber, and carbon nanotubes; metal powders or metal fibers of copper, nickel, aluminum, and silver; conductive whiskers of zinc oxide and potassium titanate; conductive metal oxides such as titanium oxide; or conductive polymers such as polyphenylene derivatives. One may be used alone, or a mixture of two or more thereof may be used. The positive electrode conductive material may typically be included in an amount of 0.1 to 10 wt%, 0.1 to 8 wt%, or 0.1 to 5 wt% based on the total weight of the positive electrode active material layer.

The positive electrode binder enhances the adhesion between positive electrode material particles and the adhesion between the positive electrode material and the positive electrode current collector. Specific examples include fluoro resin binders including polyvinylidene fluoride (PVDF) or polytetrafluoroethylene (PTFE); rubber-based binders such as styrene butadiene rubber (SBR), acrylonitrile-butadiene rubber, and styrene-isoprene rubber; cellulose-based binders such as carboxymethyl cellulose (CMC), starch, hydroxypropyl cellulose, and regenerated cellulose; polyalcohol-based binders such as polyvinyl alcohol; polyolefin-based binders such as polyethylene and polypropylene; polyimide-based binders; polyester-based binders; and silane-based binders. One may be used alone, or a mixture of two or more thereof may be used. The positive electrode binder may be included in an amount of 1 to 10 wt%, 0.5 to 10 wt%, or 1 to 8 wt%, based on the total weight of the positive electrode active material layer.

The positive electrode may be manufactured using a method known in the art. For example, the positive electrode may be manufactured by mixing a positive electrode active material, a positive electrode binder, and a positive electrode conductive material in a solvent to prepare a positive electrode slurry, applying the positive electrode slurry on a positive electrode current collector, drying, and rolling, or casting the positive electrode slurry on a separate support, and then laminating a film obtained by peeling from the support on a positive electrode current collector. In this case, as the solvent of the positive electrode slurry, positive electrode slurry solvents generally used in the relevant technical field may be used, and examples thereof include, but are not limited to, dimethyl sulfoxide (DMSO), isopropyl alcohol, N-methylpyrrolidone (NMP), acetone, water, or mixtures thereof. The solvent may be used in an amount that dissolves or disperses the positive electrode active material, the positive electrode conductive material, and the positive electrode binder, and has a viscosity that allows the negative electrode slurry to be uniformly coated.

### Lithium Secondary Battery

Next, a lithium secondary battery according to the present invention will be described. The lithium secondary battery according to the present invention comprises: the positive electrode according to the present invention; a negative electrode disposed opposite to the positive electrode; and an electrolyte. Optionally, the lithium secondary battery according to the present invention may further include a separator interposed between the positive electrode and the negative electrode.

Since the positive electrode is the same as described above, the remaining components excluding the positive electrode will be described below.

### (1) Negative Electrode

In the lithium secondary battery according to the present invention, the negative electrode includes a negative electrode active material layer including a negative electrode active material, specifically, a negative electrode current collector and a negative electrode active material layer positioned on at least one surface of the negative electrode current collector may be used.

The negative electrode current collector is not particularly limited as long as it has high conductivity without inducing chemical changes in the battery. Examples may include copper, stainless steel, aluminum, nickel, titanium, calcined carbon, copper or stainless steel, surface-treated with carbon, nickel, titanium, silver, or the like, and an aluminum-cadmium alloy. Additionally, the negative electrode current collector typically has a thickness of 3 to 500 µm. Like the positive electrode current collector, the negative electrode current collector may be formed with fine irregularities on the surface to enhance the bonding strength of the negative electrode active material. For example, the negative electrode current collector may be used in various forms such as a film, a sheet, a foil, a net, a porous material, a foam, and a non-woven fabric.

The negative electrode active material layer may be positioned on the negative electrode current collector, specifically on one or both sides of the negative electrode current collector. The negative electrode active material layer may have a single layer structure or a multilayer structure including two or more layers.

If the negative electrode active material layer has a multilayered structure composed of two or more layers, each layer may have different types and/or contents of the negative electrode active material, negative electrode binder, and/or negative electrode conductive material. By forming the negative electrode active material layer in a multilayer structure and changing the composition of each layer, battery performance characteristics, such as rapid charging performance and output characteristics, may be appropriately controlled.

Meanwhile, the negative electrode active material may be a compound capable of reversible lithium intercalation and deintercalation. Specific examples include: carbonaceous materials such as artificial graphite, natural graphite, graphitized carbon fiber, and amorphous carbon; metallic compounds capable of alloying with lithium, such as Si, Al, Sn, Pb, Zn, Bi, In, Mg, Ga, Cd, Si alloys, Sn alloys, or Al alloys; metallic oxides capable of doping and dedoping lithium, such as SiO_{β} (0 <β<2), SnO₂, vanadium oxide, and lithium vanadium oxide; or composites including the metallic compounds and carbonaceous materials, such as Si-C composites or Sn-C composites. One or a mixture of two or more thereof may be used.

Meanwhile, the carbonaceous material may include both low-crystalline carbon and high-crystalline carbon. Representative examples of low-crystalline carbon include soft carbon and hard carbon. High-crystalline carbon includes amorphous, plate-like, flaky, spherical, or fibrous natural or artificial graphite, kish graphite, pyrolytic carbon, mesophase pitch-based carbon fiber, meso-carbon microbeads, and mesophase pitches, and high-temperature calcined carbons such as petroleum or coal tar pitch-derived cokes.

Preferably, the negative electrode active material may be a carbon-based negative electrode active material. In this case, the carbon-based negative electrode active material may include, for example, natural graphite, artificial graphite, graphitized carbon fiber, amorphous carbon, soft carbon, hard carbon, or a combination thereof. More preferably, the carbon-based negative electrode active material may include natural graphite and artificial graphite.

The carbon-based negative electrode active material may have a mean particle diameter D₅₀ of 2 to 30 µm, preferably, 5 to 30 µm.

The negative electrode active material may be included in an amount of 80 wt% to 98 wt%, preferably, 90 wt% to 98 wt%, and more preferably, 93 wt% to 98 wt%, based on the total weight of the negative electrode active material layer. When the content of the negative electrode active material satisfies the above range, excellent energy density may be achieved.

Meanwhile, the negative electrode active material layer may further include a negative electrode conductive material and/or a negative electrode binder in addition to the negative electrode active material.

The negative electrode conductive material is used to impart conductivity to the negative electrode. Any material that does not induce chemical changes and possesses electronic conductivity in the battery may be used without particular limitations. Specific examples include: carbon-based materials such as carbon black, acetylene black, Ketjen black, channel black, furnace black, lamp black, thermal black, carbon fiber, and carbon nanotubes; metal powders or metal fibers of copper, nickel, aluminum, and silver; conductive whiskers of zinc oxide and potassium titanate; conductive metal oxides such as titanium oxide; or conductive polymers such as polyphenylene derivatives. One may be used alone, or a mixture of two or more thereof may be used.

The negative electrode conductive material may typically be included in an amount of 0.1 to 10 wt%, 0.1 wt% to 8 wt%, or 0.1 to 5 wt%, based on the total weight of the negative electrode active material layer.

The negative electrode binder serves to enhance the adhesion between the negative electrode active material particles and the adhesion between the negative electrode active material and the negative electrode current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluoro elastomer, or various copolymers thereof. One may be used alone, or a mixture of two or more thereof may be used.

The negative electrode binder may be included in an amount of 0.1 to 10 wt%, 0.5 to 10 wt%, or 1 to 8 wt%, based on the total weight of the negative electrode active material layer.

The negative electrode may be manufactured by any method known in the art. For example, the negative electrode may be manufactured by mixing a negative electrode active material, a negative electrode binder, and/or a negative electrode conductive material in a solvent to prepare a negative electrode slurry, applying the negative electrode slurry onto a negative electrode current collector, followed by drying and rolling, or casting the negative electrode slurry onto a separate support, laminating a film obtained by peeling from the support onto a negative electrode current collector.

Meanwhile, the solvent for the negative electrode slurry may be any solvent commonly used in the art. Examples include dimethyl sulfoxide (DMSO), isopropyl alcohol, N-methylpyrrolidone (NMP), acetone, water, or mixtures thereof, without limitation. The solvent may be used in an amount that dissolves or disperses the negative electrode active material, negative electrode conductive material, and negative electrode binder, and has a viscosity that allows the negative electrode slurry to be uniformly coated.

### (2) Electrolyte

The electrolyte according to the present invention may include a lithium salt and an organic solvent.

The lithium salt may be any compound capable of providing lithium ions used in a lithium secondary battery, without particular limitations. Specifically, the lithium salt may include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably within a range of 0.1 to 5.0 M, preferably, 0.1 to 3.0 M. Within this range of the concentration of the lithium salt, the electrolyte exhibits appropriate conductivity and viscosity, resulting in excellent electrolyte performance and efficient lithium ion mobility.

The organic solvent may include at least one of a cyclic carbonate-based organic solvent, a linear carbonate-based organic solvent, a linear ester-based organic solvent, and a cyclic ester-based organic solvent.

The cyclic carbonate-based organic solvent is a high-viscosity organic solvent and may typically include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate.

In addition, the linear carbonate-based organic solvent is an organic solvent with low viscosity and low dielectric constant. Typical examples thereof include at least one organic solvent selected from the group consisting of dimethyl carbonate (DMC), diethyl carbonate (DEC), dipropyl carbonate, ethyl methyl carbonate (EMC), methyl propyl carbonate, and ethyl propyl carbonate, and specifically, ethyl methyl carbonate (EMC).

Specific examples of the linear ester-based organic solvent include at least one organic solvent selected from the group consisting of methyl acetate, ethyl acetate, propyl acetate, methyl propionate, ethyl propionate, propyl propionate, and butyl propionate.

The cyclic ester-based organic solvent includes at least one organic solvent selected from the group consisting of butyrolactone, valerolactone, and caprolactone.

Preferably, the electrolyte according to the present invention may include ethylene carbonate and dimethyl carbonate as the organic solvent.

Meanwhile, in addition to the electrolyte components, the electrolyte may additionally include other additives for the purpose of improving battery life characteristics, suppressing battery capacity reduction, and enhancing battery discharge capacity.

Typical examples of the additives include at least one selected from the group consisting of cyclic carbonate-based compounds, halogen-substituted carbonate-based compounds, sultone-based compounds, sulfate-based compounds, borate-based compounds, nitrile-based compounds, benzene-based compounds, amine-based compounds, silane-based compounds, and lithium salt-based compounds different from the lithium salt contained in the electrolyte.

Specifically, the other additives may include one or two or more compounds selected from the group consisting of vinylene carbonate (VC), vinylethylene carbonate, fluoroethylene carbonate (FEC), 1,3-propane sultone (PS), 1,4-butane sultone, ethene sultone, 1,3-propene sultone (PRS), 1,4-butene sultone, 1-methyl-1,3-propene sultone, ethylene sulfate (Esa), trimethylene sulfate (TMS), methyl trimethylene sulfate (MTMS), tetraphenylborate, lithium oxalyldifluoroborate, succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, fluorobenzene, triethanolamine, ethylenediamine, tetravinylsilane, LiN(SO₂F)₂ (lithium bis (fluorosulfonyl) imide, LiFSI), LiN(SO₂CF₃)₂ (lithium bis (trifluoromethane sulfonyl) imide, LiTFSI), LiPO₂F₂, LiODFB, LiBOB (lithium bisoxalatoborate (LiB(C₂O₄)₂)) and LiBF₄.

The other additives may be included in an amount of 0.01 to 20 wt% based on the total weight of the electrolyte, preferably, 0.05 to 5.0 wt%. If the content of the other additives is less than 0.01 wt%, the effect of improving the low-temperature output of the battery and the high-temperature storage characteristics and high-temperature lifespan characteristics may be insignificant, and if the content of the other additives exceeds 20 wt%, there is a possibility that excessive side reactions occur in the electrolyte during charging and discharging of the battery. In particular, when the additives for forming an SEI film are added in excessive amounts, the additives may not be sufficiently decomposed at high temperatures and may exist as unreacted substances or precipitated substances in the electrolyte at room temperature. Accordingly, side reactions that reduce the lifespan or resistance characteristics of the secondary battery may occur.

### (3) Separator

The separator physically separates the negative electrode and positive electrode and provides a path for lithium ions. Any separator typically used in lithium secondary batteries may be used without particular limitations. In this case, the separator may be interposed between the positive electrode and negative electrode.

Specific examples include porous polymer films, for example, porous polymer films formed from polyolefin-based polymers such as ethylene homopolymer, propylene homopolymer, ethylene/butene copolymer, ethylene/hexene copolymer, and ethylene/methacrylate copolymer, or laminated structures of two or more layers thereof. In addition, the conventional porous nonwoven fabrics, for example, nonwoven fabrics formed from high-melting-point glass fibers or polyethylene terephthalate fibers, may also be used. In addition, coated separators containing ceramic components or polymer materials for securing heat resistance or mechanical strength may be used and may optionally be used in a single layer or multilayer structure.

The lithium secondary battery according to the present invention may be usefully applied to portable devices such as mobile phones, laptop computers, and digital cameras, as well as electric vehicles such as hybrid electric vehicles (HEVs). Because the lithium secondary battery according to the present invention may achieve excellent output characteristics even at low temperatures, it is particularly useful in the electric vehicle field.

According to another embodiment of the present invention, a battery module including the lithium secondary battery according to the present invention as a unit cell and a battery pack including the same are provided.

The battery module or battery pack may be used as a power source for any one or more medium- to large-sized devices, such as power tools; electric vehicles including electric vehicles (EVs), hybrid electric vehicles, and plug-in hybrid electric vehicles (PHEVs); or power storage systems.

Hereinafter, the present invention will be described in more detail through specific examples. However, the following examples are intended to enable those skilled in the art to fully understand and easily practice the present invention, and the scope of the present invention is not limited to the examples.

### Comparative Example 1

Ni_{0.6}Co_{0.1}Mn_{0.3}(OH)₂ and Li₂CO₃ were mixed in a molar ratio of (Ni+Co+Mn) :Li of 1:1.05, and calcined at 970°C for 11 hours to produce a single particle-type lithium nickel-based oxide having a composition of LiNi_{0.6}Co_{0.1}Mn_{0.3}O₂. The lithium nickel-based oxide was used as a positive electrode active material.

### Example 1

CH₃COOLi, (CH₃COO)₂Mn, and Al(NO₃)₃ were mixed in a molar ratio of Li:Mn:Al of 2:3:1 and heat treated at 600°C for 12 hours to prepare a coating raw material containing Li₂Mn₃AlO₈.

The coating raw material was mixed with the single particle-type lithium nickel-based oxide prepared in Comparative Example 1, and heat treated at 400°C for 3 hours to prepare a positive electrode active material including a coating layer containing Li₂Mn₃AlO₈.

The Li₂Mn₃AlO₈ was confirmed to be included in an amount of 10,000 ppm based on the total weight of the positive electrode active material.

### Example 2

LiOH, (CH₃COO)₂Mn, and (NH₄)₆Mo₇O₂₄ were mixed in a molar ratio of Li:Mn:Mo of 8:8:12, and heat treated at 400°C for 12 hours to prepare a coating raw material containing Li₈Mn₈Mo₁₂O₄₈.

The coating raw material was mixed with the single particle-type lithium nickel-based oxide prepared in Comparative Example 1, and heat treated at 400°C for 3 hours to prepare a positive electrode active material including a coating layer containing Li₈Mn₈Mo₁₂O₄₈.

It was confirmed that Li₈Mn₈Mo₁₂O₄₈ was contained in an amount of 10,000 ppm based on the total weight of the positive electrode active material.

### Experimental Example 1: Confirmation of Coating Components

XRD analysis was performed on the coating raw materials prepared in Examples 1 and 2 using a D8 Endeavor X-ray diffractometer of Bruker Co. Through that, the coating components contained in the coating layers of the positive electrode active materials prepared in Examples 1 and 2 were confirmed.

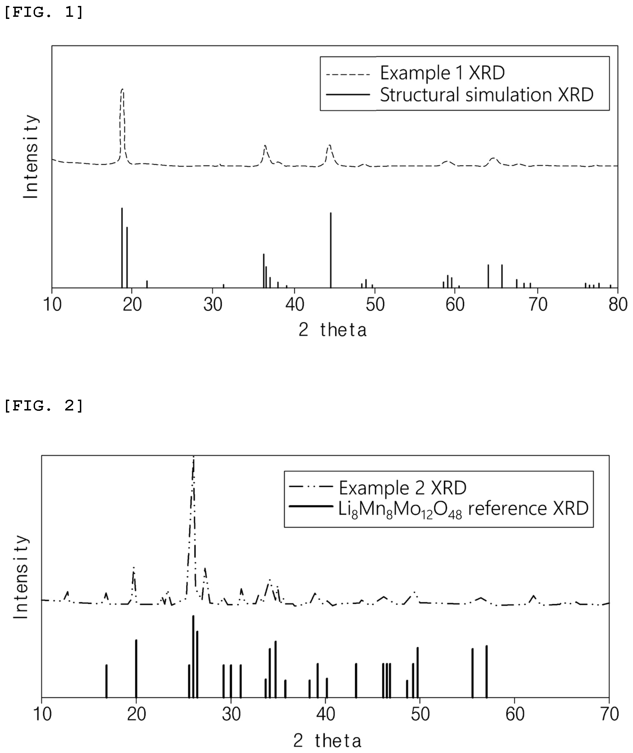

Specifically, X-ray diffraction analysis patterns were obtained for the coating raw materials prepared in Examples 1 and 2 using Cu-Kα radiation at 40 kV over a 2θ range of 10° to 80°. For Example 1, the obtained X-ray diffraction analysis pattern was compared with that obtained through structural simulation of Li₂Mn₃AlO₈. For Example 2, the obtained X-ray diffraction analysis pattern was compared with a reference X-ray diffraction pattern of Li₈Mn₈Mo₁₂O₄₈. Through the comparison, it was confirmed whether Li₂Mn₃AlO₈ and Li₈Mn₈Mo₁₂O₄₈ were formed in the coating raw materials prepared in Examples 1 and 2 by the presence of crystal peaks corresponding to Li₂Mn₃AlO₈ and Li₈Mn₈Mo₁₂O₄₈, respectively, in the X-ray diffraction analysis patterns of the coating raw materials prepared in Examples 1 and 2. The results are shown in FIGS. 1 and 2, respectively.

Referring to FIGS. 1 and 2, it can be confirmed that Li₂Mn₃AlO₈ was formed in the coating raw material prepared in Example 1, and Li₈Mn₈Mo₁₂O₄₈ was formed in the coating raw material prepared in Example 2.

### Experimental Example 2: Evaluation of Low-Temperature Output Characteristics

Each of the positive electrode active materials prepared in Comparative Example 1 and Examples 1 and 2, a positive electrode conductive material (super C), and a positive electrode binder (PVdF) were mixed in N-methyl pyrrolidone at a weight ratio of 95:2:3 to prepare a positive electrode slurry. The positive electrode slurry was applied to an aluminum current collector, dried, and rolled to manufacture a positive electrode.

A lithium metal electrode was used as a negative electrode.

An electrode assembly was manufactured by interposing a porous polyethylene separator between the positive electrode and negative electrode manufactured above, the electrode assembly was placed inside a case, and an electrolyte was injected into the case to manufacture a lithium secondary battery. The electrolyte was prepared by dissolving 1 M lithium hexafluorophosphate (LiPF₆) in an organic solvent containing ethylene carbonate, dimethyl carbonate, and diethyl carbonate at a weight ratio of 1:2:1.

The lithium secondary batteries manufactured as described above were each charged to SOC 20, placed in a low-temperature (-10°C) chamber and left for 3 hours, and then continuously discharged at a 2 C constant current for 18 seconds to measure the voltage drop at low temperatures. The resistance (R = ΔV/I) was calculated by dividing the voltage drop (ΔV) for 0 to 18 seconds by the current value (I). The results are shown in Table 1 below.

**[Table 1]**

| | Low-temperature resistance (Ω) |
|---|---|
| Comparative Example 1 | 266 |
| Example 1 | 231 |
| Example 2 | 249 |

Through Table 1 above, it can be confirmed that the low-temperature resistance of the lithium secondary batteries, in which the positive electrode active materials of Examples 1 and 2, with a coating layer including the compound of [Formula 2] are applied, is significantly lower than that of the lithium secondary battery in which the positive electrode active material of Comparative Example 1 without a coating layer is applied.

## Claims

1. A positive electrode active material comprising:
a lithium nickel-based oxide; and
a coating layer formed on the lithium nickel-based oxide and comprising a compound represented by the following [Formula 2]:
[Formula 2] LiₓMn_{y}M⁴_{z}O_{w}
in [Formula 2], M⁴ is Al or Mo, x is an integer from 2 to 8, y is an integer from 2 to 8, z is an integer from 1 to 12, and w is an integer from 8 to 48.

2. The positive electrode active material according to claim 1, wherein the compound represented by [Formula 2] is Li₂Mn₃AlO₈ or Li₈Mn₈Mo₁₂O₄₈.

3. The positive electrode active material according to claim 1, wherein the compound represented by [Formula 2] is comprised in 100 ppm to 20,000 ppm based on the total weight of the positive electrode active material.

4. The positive electrode active material according to claim 1, wherein the lithium nickel-based oxide is represented by the following [Formula 1]:
[Formula 1] LiₐNi_{b}Co_{c}M¹_{d}M²ₑO₂
in [Formula 1], M¹ is Mn, Al, or a combination thereof, M² comprises one or more elements selected from the group consisting of Ti, Mg, Al, Zr, Y, Ba, Ca, Sr, W, Ta, Nb, and Mo, 0.9≤a≤1.1, 0.5≤b<1, 0<c<0.5, 0<d<0.5, and 0≤e≤0.2.

5. The positive electrode active material according to claim 1, wherein the lithium nickel-based oxide is a single particle-type lithium nickel-based oxide containing 50 or less nodules.

6. The positive electrode active material according to claim 1, wherein the lithium nickel-based oxide has a Ni content of 50 mol% to 80 mol% among total metals excluding lithium.

7. The positive electrode active material according to claim 1, wherein the lithium nickel-based oxide is represented by the following [Formula 1-1]:
[Formula 1-1] Liₐ₁[Ni_{b1}Co_{c1}Mn_{d1}M³ₑ₁]O₂
in [Formula 1-1], M³ comprises one or more elements selected from the group consisting of Ti, Mg, Al, Zr, Y, Ba, Ca, Sr, W, Ta, Nb, and Mo, 0.9≤a1≤1.1, 0.5≤b1≤0.8, 0<c1<0.5, 0<d1<0.5, and 0≤e1≤0.2.

8. A method for preparing a positive electrode active material, the method comprising:
a step of preparing a coating raw material by mixing a Li-containing material, a Mn-containing material, and a M⁴-containing material (where M⁴ is Al or Mo); and
a step of mixing the coating raw material with a lithium nickel-based oxide and heat-treating the mixture to form a coating layer comprising a compound represented by the following [Formula 2] on the lithium nickel-based oxide:
[Formula 2] LiₓMn_{y}M⁴_{z}O_{w}
in [Formula 2], M⁴ is Al or Mo, x is an integer from 2 to 8, y is an integer from 2 to 8, z is an integer from 1 to 12, and w is an integer from 8 to 48.

9. The method for preparing a positive electrode active material according to claim 8, wherein the Li-containing material comprises CH₃COOLi, LiNO₃, LiH₃C₂O₂, LiOH, Li₂CO₃ or a combination thereof.

10. The method for preparing a positive electrode active material according to claim 8, wherein the Mn-containing material comprises (CH₃COO)₂Mn, MnCO₃, MnO, MnO₂, Mn₂O₃, Mn₃O₄, MnH₆C₄O₄ or a combination thereof.

11. The method for preparing a positive electrode active material according to claim 8, wherein the M⁴-containing material comprises Al₂O₃, AlN, Al(NO₃)₃, MoO₃, (NH₄)₆Mo₇O₂₄ or a combination thereof.

12. The method for preparing a positive electrode active material according to claim 8, wherein the coating raw material and the lithium nickel-based oxide are dry or wet mixed.

13. The method for preparing a positive electrode active material according to claim 8, wherein the heat-treating is performed at 100°C to 1000°C for 1 hour to 12 hours.

14. The method for preparing a positive electrode active material according to claim 8, wherein the step of preparing the coating raw material comprises:
a step of forming a mixture by mixing the Li-containing material, the Mn-containing material, and the M⁴-containing material (where M⁴ is Al or Mo); and
a step of pre-heat treating the mixture to form a coating raw material.

15. The method for preparing a positive electrode active material according to claim 14, wherein the pre-heat treating is performed at 100°C to 1000°C for 3 hours to 20 hours.

16. A positive electrode comprising the positive electrode active material according to any one of claims 1 to 7.

17. A lithium secondary battery comprising: the positive electrode of claim 16; a negative electrode oppositely disposed to the positive electrode; and an electrolyte.
